# EUROPEAN PATENT SPECIFICATION

(11) **EP 3 515 166 B1**
(45) Date of publication and mention of the grant of the patent: **30.10.2024**
(21) Application number: 17781241.9
(22) Date of filing: 21.09.2017
(51) Int. Cl.: A01B 59/00, A01B 59/06

(54) **FAST ATTACH IMPLEMENT STRUCTURE**
VORRICHTUNGSSTRUKTUR MIT SCHNELLER BEFESTIGUNG
STRUCTURE DE DISPOSITIF À FIXATION RAPIDE

(30) Priority: 21.09.2016 US 201662397569 P
(43) Date of publication of application: 31.07.2019
(73) Proprietor: MTD Products Inc., Valley City, OH 44280 (US)
(72) Inventor: BORSHOV, Alex, 71277 Ruteheim Baden-Wurttemberg (DE); BIGGE, William, Brunswick, Ohio 44212 (US); HOBRATH, Gerald, Brunswick, Ohio 44212 (US)
(74) Representative: SBD IPAdmin
(86) International application number: PCT/US2017/052826
(87) International publication number: WO 2018/057816

(56) References cited:
- EP-A1- 1 527 666
- EP-A2- 1 275 288
- CH-A- 293 841
- DE-A1- 1 947 581
- US-A- 3 949 540
- US-A- 5 082 065
- US-A- 6 138 770
- US-A1- 2005 284 120
- US-A1- 2009 277 143

## Description

### BACKGROUND

### 1. Field of the Disclosure

The present disclosure relates to lawn and garden equipment, and more particularly, to an implement attachment system for a lawn maintenance vehicle, such as a simplified structure for mounting implements to a lawn maintenance vehicle.

### 2. Description of Related Art

Currently available riding lawn mowers, garden tractors, and the like permit the use of mounted implements, whether on the front or the rear of the lawn maintenance vehicle. When using such implements, many known fastening methods include the use of threaded fasteners and/or require separate hand tools for attachment. This can require additional time and effort to attach implements to the lawn maintenance vehicle.

Therefore, a need exists for an implement attachment system that does not require hand tools and reduces the amount of time needed to attach an implement to the lawn maintenance vehicle. Further information on the state of the art can be obtained from: US 2005/284120 A1; US 2009/277143 A1; US 5082065 A; US 6138770 A; EP 1527666 A1; CH 293841 A; EP 1275288 A2; US 3949540 A; and DE 19 47581 A1.

### BRIEF SUMMARY

Accordingly, the present invention provides an implement attachment system for a lawn maintenance vehicle as defined in claim 1.

### BRIEF DESCRIPTION OF THE DRAWINGS

The foregoing and other aspects of the present disclosure will become apparent to those skilled in the art to which the present disclosure relates upon reading the following description with reference to the accompanying drawings, in which:
FIG. 1 is a perspective view of a rear side of a lawn maintenance vehicle showing a fast attach apparatus according to at least one embodiment of the present disclosure;
FIG. 2 is a side view of the lawn maintenance vehicle of FIG. 1 showing the fast attach apparatus at a first step of an attachment process to the lawn maintenance vehicle;
FIG. 3 is a detail view from area 3 in FIG. 2 showing the placement of a pin into an aperture in the lawn maintenance vehicle frame;
FIG. 4 is similar to FIG. 2 showing a second step of the attachment process;
FIG. 5 is a detail view from area 5 of FIG. 4 showing the pin placement and rotation of the fast attach apparatus;
FIG. 6 is similar to FIG. 2 showing a third step of the attachment process;
FIG. 7 is a detail view from area 7 of FIG. 6 showing the pin placement and a vertical translation of the fast attach apparatus;
FIG. 8 is similar to FIG. 2 showing a fourth step of the attachment process;
FIG. 9 is a detail view from area 9 of FIG. 8 showing a forked latch rod in an unlocked position;
FIG. 10 is similar to FIG. 2 showing a fifth step of the attachment process;
FIG. 11 is a detail view from area 11 of FIG. 10 showing the forked latch rod in a locked position;
FIG. 12 shows the fast attach apparatus of FIG. 1 used with a cargo carrier implement;
FIG. 13 shows the fast attach apparatus of FIG. 1 used with a sprayer implement;
FIG. 14 shows the fast attach apparatus of FIG. 1 used with a spreader implement;
FIG. 15 is a perspective exploded view of another embodiment of a fast attach apparatus, generally for a front end of a lawn maintenance vehicle;
FIG. 16 is a perspective view of the fast attach apparatus of FIG. 15 showing the apparatus attached to a bumper;
FIG. 17 is a perspective view of a portion of the fast attach apparatus of FIG. 16 showing the addition of a brush guard; and
FIG. 18 is a side elevation view of the fast attach apparatus of FIG. 17.

### DETAILED DESCRIPTION

Example embodiments that incorporate one or more aspects of the present disclosure are described and illustrated in the drawings. These illustrated examples are not intended to be a limitation on the present disclosure. For example, one or more aspects of the present disclosure can be utilized in other embodiments and even other types of devices. Moreover, certain terminology is used herein for convenience only and is not to be taken as a limitation on the present disclosure. Still further, in the drawings, the same reference numerals are employed for designating the same elements.

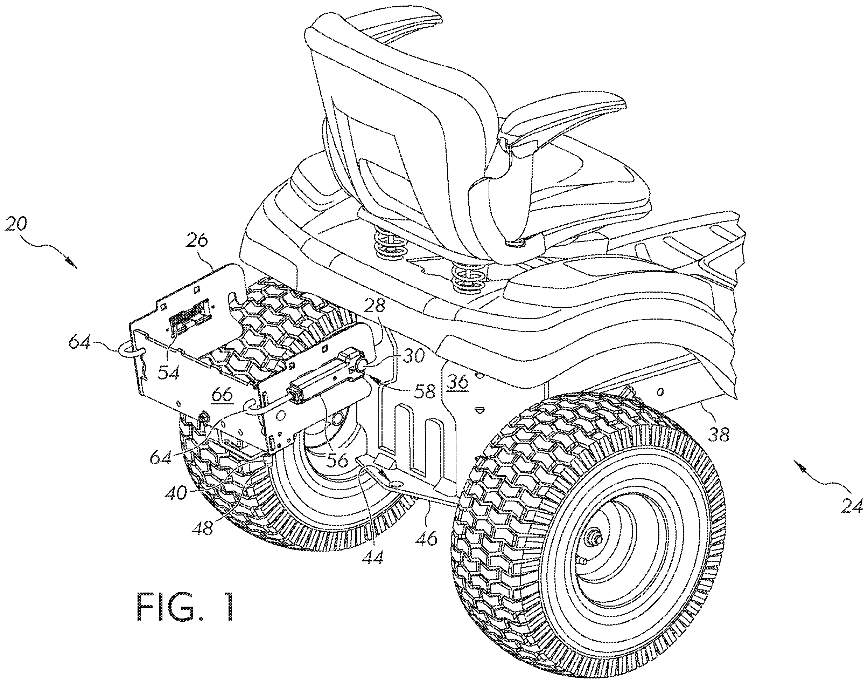

Turning to FIG. 1, an implement attachment system 20 for a lawn maintenance vehicle 24 is shown. In the shown example, the implement attachment system 20 can be described as a "fast attach apparatus," as it eliminates the use of tools (e.g., hand tools such as screwdrivers, ratchet sets, wrenches, etc.) for operations such as attaching an implement to a lawn maintenance vehicle. Examples of a lawn maintenance vehicle include, but are not limited to, a riding mower, lawn tractor, or other utility vehicle. Any number of implements can be attached to the lawn maintenance vehicle 24 including, but not limited to, a cargo carrier, a spreader, a sprayer, a grass bagger, etc. Many of these implements are relatively light, and can be lifted by an operator to attach the implement to the lawn maintenance vehicle 24. In other examples, the implement may remain on the turf and be attached to the lawn maintenance vehicle 24 after the lawn maintenance vehicle drives to a close proximity to the implement.

The implement attachment system 20 includes a box-like structure 26. The box-like structure 26 can be constructed of relatively rigid materials in order to withstand the demands of operation with a lawn maintenance vehicle 24. The box-like structure 26 defines a hook 28 configured to cooperate with fasteners 30 located on the lawn maintenance vehicle 24. The fasteners 30 can be generally cylindrical, but may also benefit from having a bolt-like formation with a bolt head 34 that is spaced from a surface 36 of the associated frame 38 located on the lawn maintenance vehicle 24.

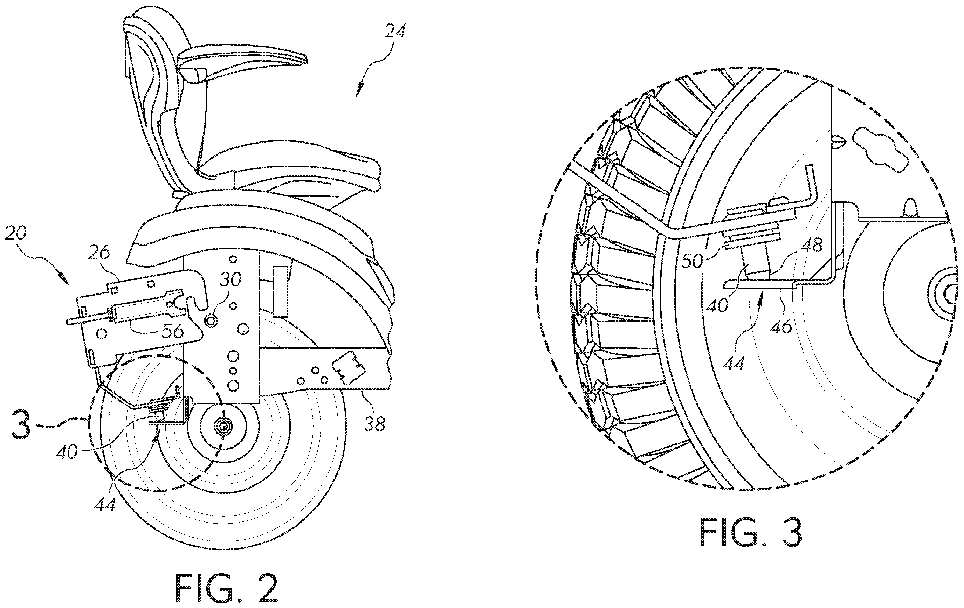

The implement attachment system 20 further includes a pin 40 that is attached to the box-like structure 26. The pin 40 extends generally downward from the box-like structure 26 and is configured to cooperate with an aperture 44 defined by a portion 46 of the associated frame 38 located on the lawn maintenance vehicle 24. The aperture 44 can be the "hitch hole" of the frame 38 located along the longitudinal centerline of the lawn maintenance vehicle 24. The pin 40 can include a beveled end 48 that can ease the insertion process of the pin 40 into the aperture 44. The pin 40 can also include a top 50 (best seen in FIG. 3) having a wider diameter than the aperture 44 such that it acts as a stop for the box-like structure 26 as it is attached to the lawn maintenance vehicle 24 to prevent further downward motion relative to the frame 38.

The implement attachment system 20 still further includes a resilient force member 54 which can be, among other things, a coil spring. The resilient force member 54 is attached to the box-like structure 26 and to a latch rod 56. The latch rod 56 can be termed an engagement structure and is attached to the resilient force member 54. Additionally, the latch rod 56 is slidingly attached to the box-like structure 26. With this construction, the latch rod 56 is urged toward an engaged position that will be further described below. The force to urge the latch rod 56 into the engaged position is provided by the resilient force member 54 (e.g., coil spring) and force provided by an operator moves the resilient force member 54 away from the engaged position toward a disengaged position.

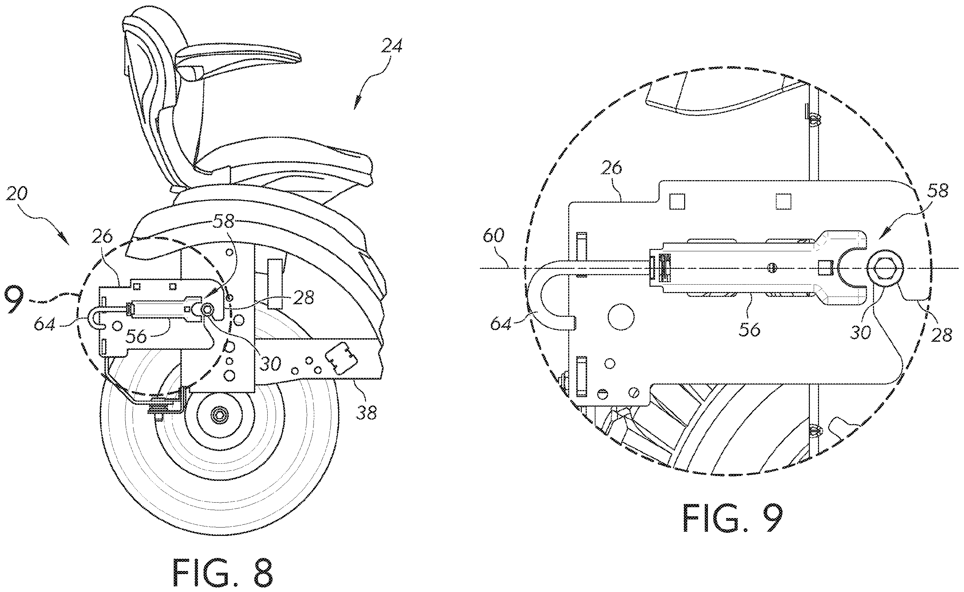

In one example, the latch rod 56 includes a forked end 58, that is configured to cooperate with the fasteners 30 to help secure the implement attachment system 20 to the lawn maintenance vehicle 24. The latch rod 56 is not secured in a rotational direction and is configured to rotate about a longitudinal axis 60 (best seen in FIG. 9). As such, the latch rod 56 can be freely rotated by an operator in particular positions along the longitudinal axis 60.

In another example, the latch rod 56 includes a curved handle 64 configured to both provide a ready handle for an operator and maintain the latch rod 56 in a disengaged position against a force supplied by the resilient force member 54 when in a first rotated position as shown in FIG. 1. In other words, the latch rod 56 is maintained in the disengaged position in FIG. 1, because the curved handle 64 is prevented from being urged toward the lawn maintenance vehicle 24 by the curved handle 64 being in contact with a rear side 66 of the box-like structure 26.

A series of steps to attach the implement attachment system 20 will now be described. With the latch rod 56 maintained in the disengaged position in as described above and as shown in FIG. 1, the operator moves to the first step as shown in FIG. 2. The right rear tire of the lawn maintenance vehicle 24 has been removed in FIG. 2 for clarity. The operator moves the box-like structure 26 to a position where the pin 40 is in close proximity to the aperture 44 (e.g., the hitch hole). It may be helpful to tilt the box-like structure a bit toward the rear as shown in FIG. 2.

Turning to FIG. 3, the detail view of the pin 40 entering the aperture 44 is shown. The pin 40 interaction with the aperture 44 can be used as a point of rotation for the second step.

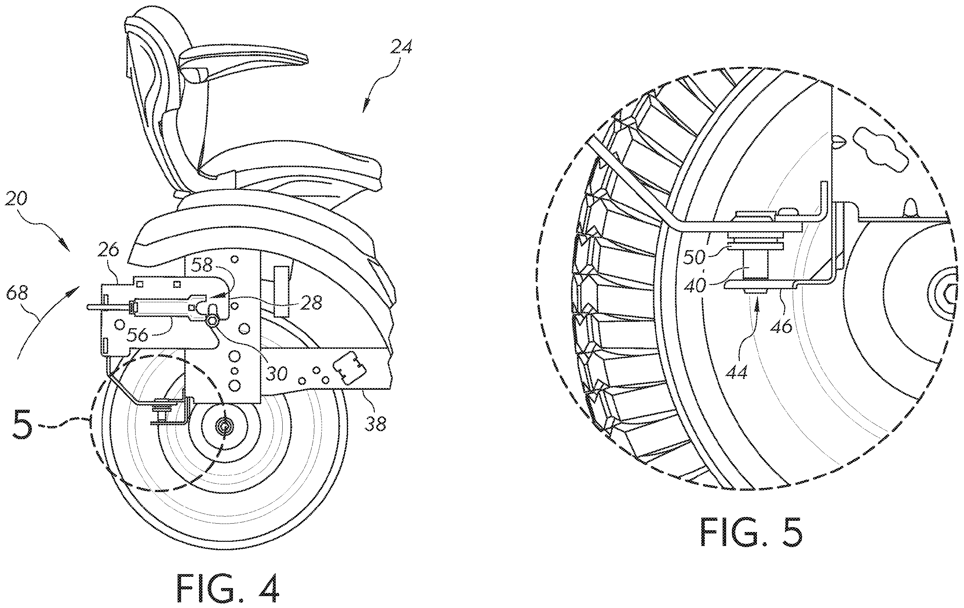

Turning to FIG. 4, the box-like structure 26 can be rotated in the direction of arrow 68 in order to place the hooks 28 over the fasteners 30 as the second step. Note the latch rod 56 remains in the disengaged position. FIG. 5 shows the pin 40 now perpendicular to the axis of the aperture 44 and is in position to translate into greater engagement with the aperture 44.

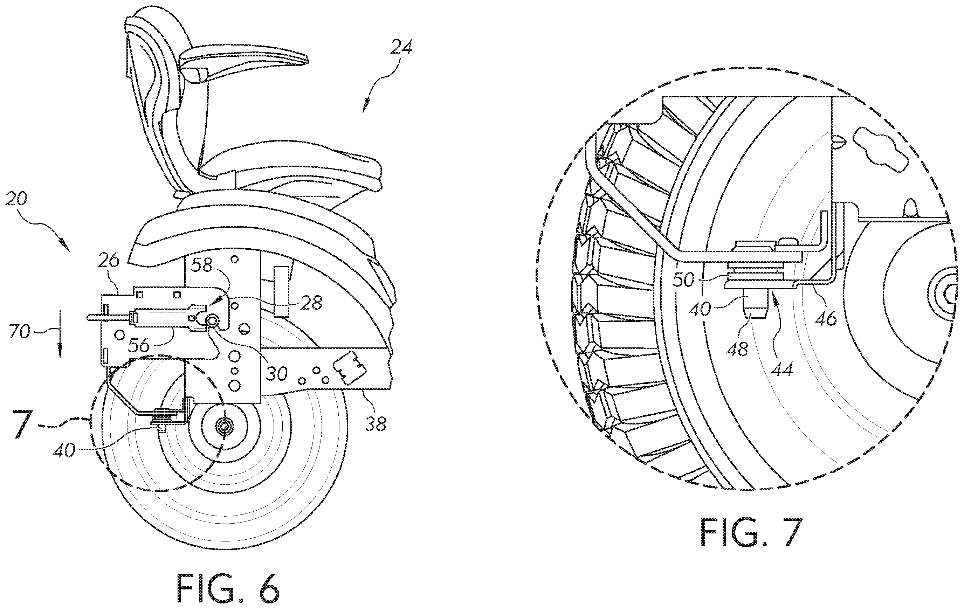

Turning to FIG. 6, the third step of the attachment process is the box-like structure 26 translating downward in the direction of arrow 70 (i.e., toward the ground). The fasteners 30 are fully engaged with the hooks 28, and note that in FIG. 7, the pin 40 is now fully engaged with the aperture 44.

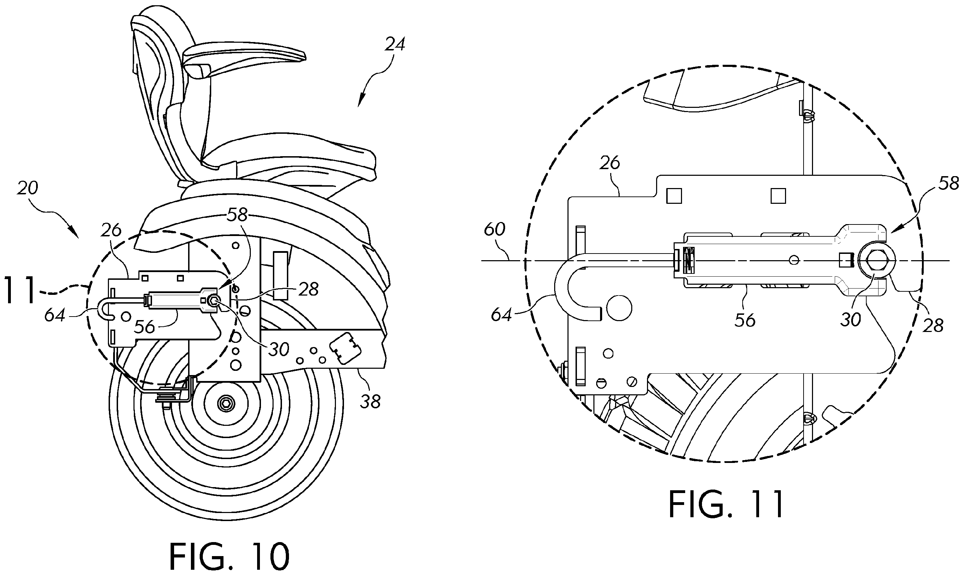

Turning to FIG. 8, the fourth step of the attachment process is shown. The operator can pull slightly rearward on the curved handle 64 to act against the resilient force member 54. Then, the operator rotates the curved handle 64 such that the curved handle 64 is no longer in physical interference with the rear side 66 of the box-like structure 26. In this way, the curved handle 64 is configured to release the latch rod 56 to an engaged position when in this second rotated position as shown in FIG. 10. FIG. 9 clearly shows the curved handle 64 out of the first rotated position that holds the latch rod 56 in the disengaged position.

Turning to FIG. 10, the fifth step of the attachment process is shown. The latch rod 56 has been urged to the engaged position by the resilient force member 54 and locks the box-like structure into attachment with the frame 38 to hold the implement(s) in place. Note that the interaction between the fastener 30 and the hook 28 prevents forward/backward translation. The enlarged diameter section of the pin 40 along with the hook 28/fastener 30 interaction limit and/or eliminate downward translation. Lastly, rotation about an axis of the fastener 30 is limited and/or eliminated by the pin 40/aperture 44 interaction.

Turning to FIG. 11, we can see that the forked end 58 of the latch rod 56 encloses the fastener 30 within the hook 28 space and limits and/or eliminates relative motion between the box-like structure 26 and the frame 38, particularly upward translational motion.

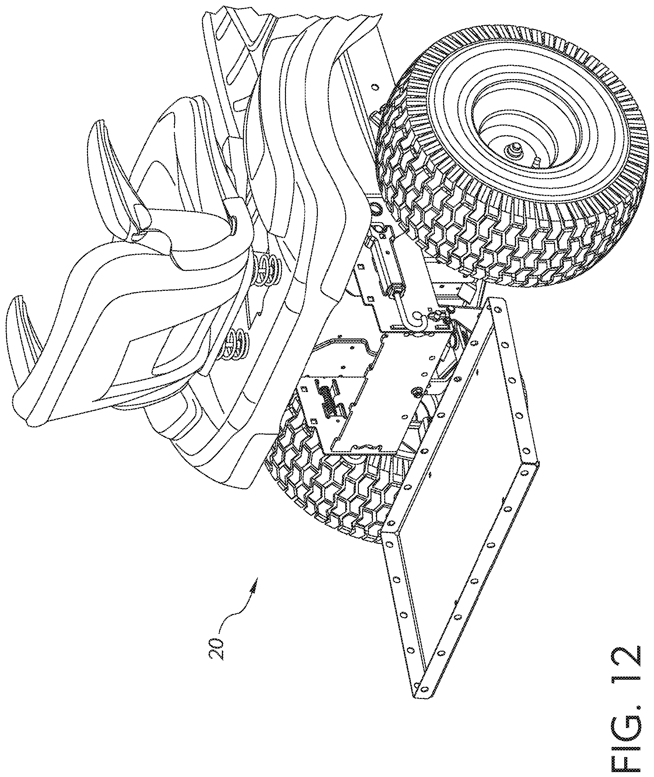

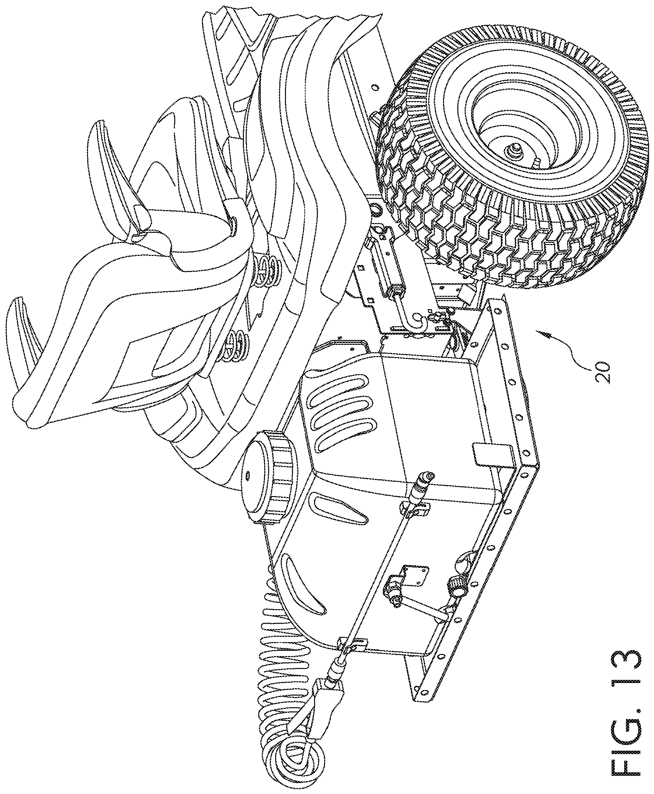

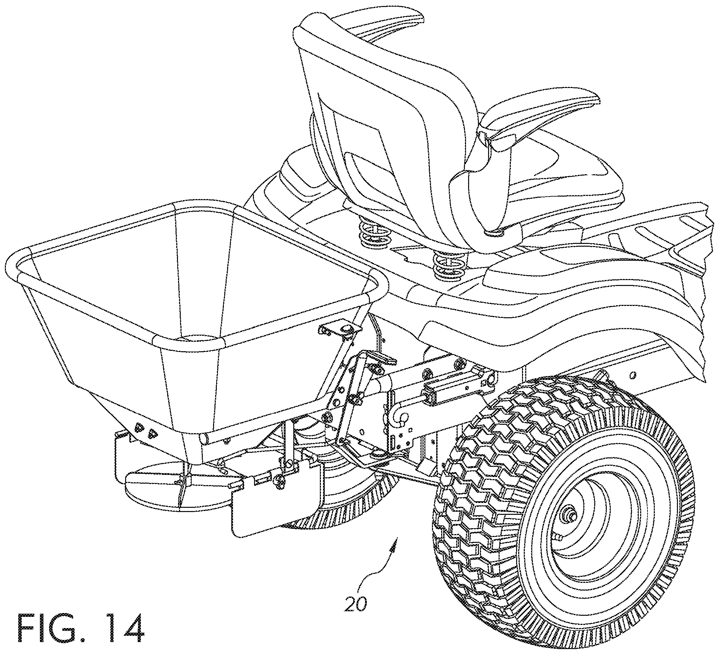

FIGS. 12-14 show the implement attachment system 20 in use with various implements, such as a cargo carrier in FIG. 12, a sprayer in FIG. 13, and a spreader in FIG. 14. Of course, other implements are also contemplated. Additionally, some of the implements can be used in combination with one another.

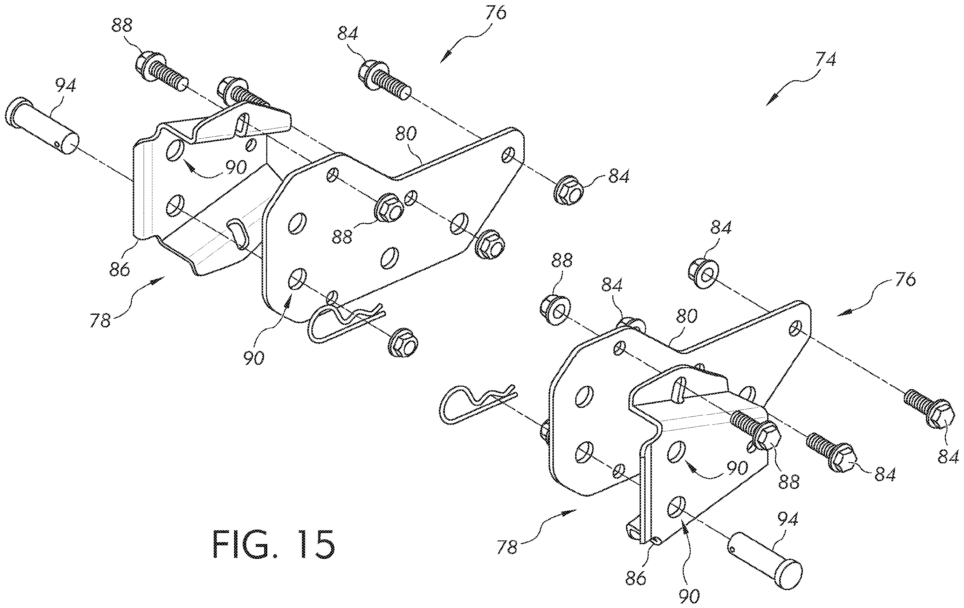

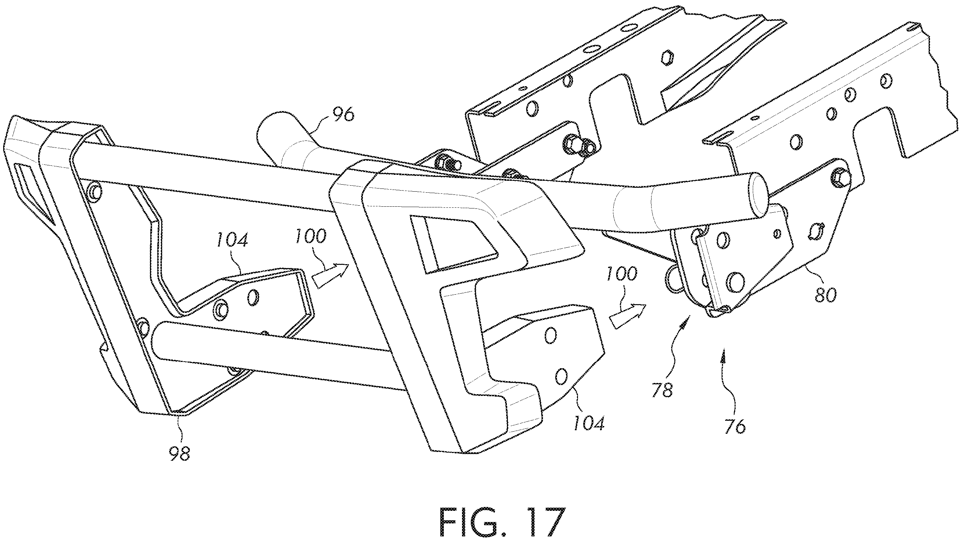

Turning to FIG. 15, structure for a fast attach apparatus or implement attachment system 74 for a front-end of a lawn maintenance vehicle (not shown) will be described. In one example, at least two attachment clips 76 are located on alternate sides of the longitudinal centerline of the lawn maintenance vehicle proximate to a front end of the lawn maintenance vehicle. Each clip 76 is fastened to a portion of the lawn maintenance vehicle. The attachment points can be on the frame of the lawn maintenance vehicle. In one example, each clip 76 can define a cavity 78. The cavity 78 may face forward and be configured to cooperatively interact with a portion of an implement (best seen in FIG. 17).

Returning to FIG. 15, the clip 76 can include a flat bracket 80 that is connected to the frame of the lawn maintenance vehicle. In one example, the flat bracket 80 is attached with threaded fasteners 84 as shown. In another example, the flat bracket 80 can be welded to the frame for a more permanent attachment method. Any suitable attachment method is contemplated.

The clip 76 can further include a receiver bracket 86 such that the flat bracket 80 and the receiver bracket form the cavity 78 that is previously described. The receiver bracket 86 can be attached to the flat bracket by threaded fasteners 88 as shown. Other attachment methods are also acceptable. The receiver bracket 86 defines at least one aperture 90, wherein the aperture 90 is configured to cooperate with a pin 94. The pin 94 is configured to pass through the aperture 90 and through a portion of the implement to secure the associated implement to the lawn maintenance vehicle. In many cases, the pin 94 is inserted and removed without an associated hand tool.

In at least one example, the pin 94 can be translatably attachable to the implement or the clip 76. The operator can then move the pin 94 or pins and removably attach the implement to the lawn maintenance vehicle. The pin 94 can be a clevis pin, or any other suitable pin. The pin 94 may be a spring-located pin that is urged out of the way by an operator, the implement is put in place, and then the operator releases the pin to have it move back into a position that constitutes a locked position for the implement.

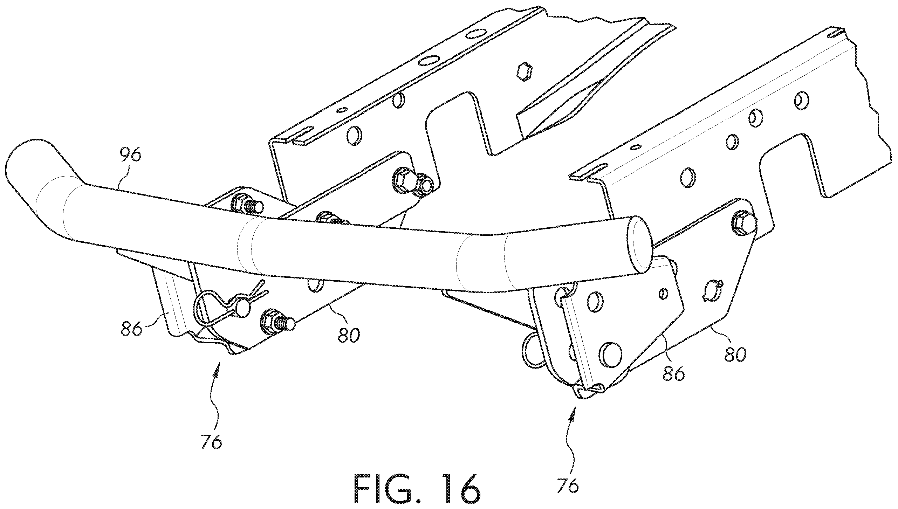

Turning to FIG. 16, in another example, the clips 76 are attached to a bumper 96 rather than the frame of the lawn maintenance vehicle, and the bumper 96 may be removably attached to the lawn maintenance vehicle.

Turning to FIG. 17, the clips 76 are again shown attached to the bumper 96 and a brush guard implement 98 is shown in preparation for attachment to the clips 76. The brush guard implement 98 is moved into place in the direction of arrows 100. As noted previously, the cavity 78 faces forward and is configured to cooperatively interact with a portion 104 of the brush guard implement 98. The portion 104 is configured to be the same general shape and size, albeit slightly smaller, than the cavity 78 to encourage a relatively snug fit between the clips 76 and the implement.

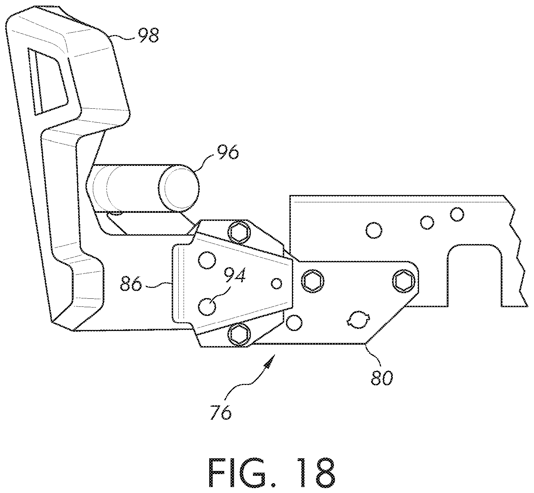

Turning to FIG. 18, the brush guard implement 98 is now in full engagement with the clips 76 and the pin 94 to lock the implement in place.

Any number of suitable implements can be used in conjunction with the present disclosure including, but not limited to, a tractor lift, a brush guard, de-thatcher, snow plow, etc. Additionally, the implement may be placed proximate to the front end of the lawn maintenance vehicle prior to attachment.

The implement attachment system includes one of a post or an aperture located on the plate. The post or aperture interacts with the opposite structure (post or aperture) located on the lawn maintenance vehicle.

In another example, the implement attachment system 74 for a lawn maintenance includes a lifting device that attaches to the implement attachment system 74 and is configured to raise the front end of the lawn maintenance vehicle to ease underbody work on the lawn maintenance vehicle.

The described implement attachment system (fast attach apparatus) can provide several benefits. The structure can provide a convenient, quick, and inexpensive way to attach implements to a lawn maintenance vehicle without the use of separate hand tools such as screwdrivers, ratchet sets, wrenches, etc. The structure described can also provide a relatively strong connection between an implement and the lawn maintenance vehicle in comparison to other attachment methods and structures.

While this disclosure has been written in conjunction with the specific embodiments described above, it is evident that many alternatives, combinations, modifications and variations are apparent to those skilled in the art. Accordingly, the described embodiments of this disclosure, as set forth above are intended to be illustrative only, and not in a limiting sense. Various changes can be made without departing from the scope of this disclosure. Combinations of the above embodiments and other embodiments will be apparent to those of skill in the art upon studying the above description and are intended to be embraced therein. Therefore, the scope of the present invention is defined by the appended claims, and all devices, processes, and methods that come within the meaning of the claims are intended to be embraced therein. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. An implement attachment system (20) for a lawn maintenance vehicle (24) comprising:
an implement mounting structure (26), wherein the implement mounting structure is box-like and defines a hook (28) configured to cooperate with fasteners (30) located on the lawn maintenance vehicle;
a pin (40), wherein the pin is attached to the implement mounting structure and the pin extends in a downward direction from the implement mounting structure, the pin is configured to cooperate with an aperture (44) defined by a portion of an associated frame (38) located on the lawn maintenance vehicle;
a resilient force member (54), wherein the resilient force member is attached to the implement mounting structure; and
a latch rod (56), wherein the latch rod is attached to the resilient force member and the latch rod is slidingly attached to the implement mounting structure;
wherein the latch rod (56) includes a curved handle (64), the curved handle is configured to maintain the latch rod in a disengaged position against a force supplied by the resilient force member (54) when the curved handle is in a first rotated position, and
wherein the curved handle (64) is configured to release the latch rod to an engaged position when the curved handle is in a second rotated position,
**characterized by** the curved handle (64) being in contact with a rear side (66) of the box-like implement mounting structure (26), when the curved handle is in the first rotated position, to maintain the latch rod in the disengaged position by preventing the curved handle (64) from being urged toward the lawn maintenance vehicle (24).

2. The implement attachment system of claim 1, wherein the latch rod (56) further includes a forked end (58), the forked end is configured to cooperate with a fastener (30) located on the associated frame to help secure the implement attachment system to the lawn maintenance vehicle.

3. The implement attachment system of any of claims 1-2, wherein the resilient force member (54) is a coil spring.

4. The implement attachment system of any of claims 1-3, wherein the latch rod (56) is configured to rotate about a longitudinal axis.

5. A lawn maintenance vehicle (24) and the implement attachment system (20) according to any preceding claim, wherein the implement attachment system (20) is located on a rear side of the lawn maintenance vehicle (24).

## Patentansprüche

1. Geräteanbringungssystem (20) für ein Rasenpflegefahrzeug (24), umfassend:
eine Gerätemontieranordnung (26), wobei die Gerätemontieranordnung kastenartig ist und einen Haken (28) definiert, der so konfiguriert ist, dass er mit Befestigungselementen (30), die sich am Rasenpflegefahrzeug befinden, zusammenwirkt;
einen Stift (40), wobei der Stift an der Gerätemontieranordnung angebracht ist und der Stift sich von der Gerätemontieranordnung in eine Abwärtsrichtung erstreckt, wobei der Stift so konfiguriert ist, dass er mit einer Öffnung (44) zusammenwirkt, die von einem Abschnitt eines zugehörigen Rahmens (38), der sich am Rasenpflegefahrzeug befindet, definiert wird;
ein elastisches Kraftelement (54), wobei das elastische Kraftelement an der Gerätemontieranordnung angebracht ist; und
eine Riegelstange (56), wobei die Riegelstange an dem elastischen Kraftelement angebracht ist und die Riegelstange gleitend an der Gerätemontieranordnung angebracht ist;
wobei die Riegelstange (56) einen gekrümmten Griff (64) beinhaltet, der gekrümmte Griff so konfiguriert ist, dass er die Riegelstange in einer Freigabeposition gegen eine Kraft hält, die von dem elastischen Kraftelement (54) bereitgestellt wird, wenn sich der gekrümmte Griff in einer ersten gedrehten Position befindet, und
wobei der gekrümmte Griff (64) so konfiguriert ist, dass er die Riegelstange in eine Eingriffsposition freigibt, wenn sich der gekrümmte Griff in einer zweiten gedrehten Position befindet,
**dadurch gekennzeichnet, dass** sich der gekrümmte Griff (64) mit einer Rückseite (66) der kastenartigen Gerätemontieranordnung (26) in Kontakt befindet, wenn sich der gekrümmte Griff in der ersten gedrehten Position befindet, um die Riegelstange durch Verhindern, dass der gekrümmte Griff (64) zum Rasenpflegefahrzeug (24) hin gedrückt wird, in der Freigabeposition zu halten.

2. Geräteanbringungssystem nach Anspruch 1, wobei die Riegelstange (56) weiter ein gegabeltes Ende (58) beinhaltet, das gegabelte Ende so konfiguriert ist, dass es mit einem Befestigungselement (30) zusammenwirkt, das sich am zugehörigen Rahmen befindet, um zu helfen, das Geräteanbringungssystem am Rasenpflegefahrzeug zu sichern.

3. Geräteanbringungssystem nach einem der Ansprüche 1-2, wobei das elastische Kraftelement (54) eine Schraubenfeder ist.

4. Geräteanbringungssystem nach einem der Ansprüche 1-3, wobei die Riegelstange (56) so konfiguriert ist, dass sie sich um eine Längsachse dreht.

5. Rasenpflegefahrzeug (24) und Geräteanbringungssystem (20) nach einem vorstehenden Anspruch, wobei sich das Geräteanbringungssystem (20) an einer Rückseite des Rasenpflegefahrzeugs (24) befindet.

## Revendications

1. Système de fixation d'outil (20) pour un véhicule d'entretien de pelouse (24), comprenant :
une structure de montage d'outil (26), dans lequel la structure de montage d'outil est en forme de boîte et définit un crochet (28) configuré pour coopérer avec des fixations (30) situées sur le véhicule d'entretien de pelouse ;
une broche (40), dans lequel la broche est fixée à la structure de montage d'outil et la broche s'étend dans une direction vers le bas à partir de la structure de montage d'outil, la broche est configurée pour coopérer avec une ouverture (44) définie par une partie d'un cadre associé (38) situé sur le véhicule d'entretien de la pelouse ;
un élément de force élastique (54), dans lequel l'élément de force élastique est fixé à la structure de montage d'outil ; et
une tige de verrouillage (56), dans lequel la tige de verrouillage est fixée à l'élément de force élastique et la tige de verrouillage est fixée de manière coulissante à la structure de montage d'outil ;
dans lequel la tige de verrouillage (56) inclut une poignée incurvée (64), la poignée incurvée est configurée pour maintenir la tige de verrouillage dans une position dégagée à l'encontre d'une force fournie par l'élément de force élastique (54) lorsque la poignée incurvée est dans une première position tournée, et
dans lequel la poignée incurvée (64) est configurée pour libérer la tige de verrouillage dans une position en prise lorsque la poignée incurvée est dans une seconde position tournée,
**caractérisé en ce que** la poignée incurvée (64) est en contact avec un côté arrière (66) de la structure de montage d'outil en forme de boîte (26), lorsque la poignée incurvée est dans la première position tournée, pour maintenir la tige de verrouillage dans la position dégagée en empêchant la poignée incurvée (64) d'être poussée vers le véhicule d'entretien de pelouse (24).

2. Système de fixation d'outil selon la revendication 1, dans lequel la tige de verrouillage (56) inclut en outre une extrémité fourchue (58), l'extrémité fourchue est configurée pour coopérer avec une fixation (30) située sur le cadre associé pour aider à fixer le système de fixation d'outil au véhicule d'entretien de pelouse.

3. Système de fixation d'outil selon l'une quelconque des revendications 1- 2, dans lequel l'élément de force élastique (54) est un ressort hélicoïdal.

4. Système de fixation d'outil selon l'une quelconque des revendications 1-3, dans lequel la tige de verrouillage (56) est configurée pour tourner autour d'un axe longitudinal.

5. Véhicule d'entretien de pelouse (24) et système de fixation d'outil (20) selon une quelconque revendication précédente, dans lesquels le système de fixation d'outil (20) est situé sur un côté arrière du véhicule d'entretien de pelouse (24).
